# EUROPÄISCHE PATENTSCHRIFT

(11) **EP 0 839 082 B1**
(45) Veröffentlichungstag und Bekanntmachung des Hinweises auf die Patenterteilung: **23.05.2001**
(21) Anmeldenummer: 96925749.2
(22) Anmeldetag: 13.07.1996
(51) Int. Cl.: B23Q 1/00, B23B 51/06

(54) **BOHRER MIT KÜHLSCHMIERSTOFFKANAL**
DRILL WITH COOLING-LUBRICANT CHANNEL
FORET AVEC CANAL A REFRIGERANT LUBRIFIANT

(30) Priorität: 14.07.1995 DE 29511430 U; 08.08.1995 DE 29512745 U; 21.02.1996 DE 29602997 U
(43) Veröffentlichungstag der Anmeldung: 06.05.1998
(73) Patentinhaber: KENNAMETAL INC., Latrobe, PA 15650-0231 (US)
(72) Erfinder: KAMMERMEIER, Dirk, D-90547 Stein (DE); BORSCHERT, Bernhard, D-90408 Nürnberg (DE)
(74) Vertreter: Tergau, Enno, Dipl.-Ing.
(86) Internationale Anmeldenummer: EP9603083
(87) Internationale Veröffentlichungsnummer: WO9703792

(56) Entgegenhaltungen:
- EP-A- 0 419 428
- EP-A- 0 482 982
- EP-A- 0 545 826
- DE-B- 1 289 386
- GB-A- 984 664
- US-A- 1 425 122

## Beschreibung

Die Erfindung betrifft einen Bohrer mit wenigstens einem Fluidkanal zur Kühlung und/oder Schmierung des Zerspanungsprozesses. Bei herkömmlichen Bohrwerkzeugen bzw. Bohrern der genannten Art erfolgt die Kühlschmiermittel-Zuführung über wenigstens einen im Bohrer angeordneten Fluidkanal, der über eine Austrittsöffnung in der Freifläche einer Hauptschneide nach außen mündet. Der Kühlkanal erstreckt sich durch den Bohrer hindurch und ist über eine Versorgungsöffnung in der Stirnseite des Bohrerschaftes mit Kühlschmiermittel bzw. allgemein einem zur Kühlung und/oder Schmierung während des Zerspanungsprozesses geeigneten Fluid, etwa einer Flüssigkeit, einem Gas oder einem Gemenge dieser Stoffe, versorgbar.

Ein Nachteil der bekannten Bohrer besteht darin, daß das aus den Freiflächen der Hauptschneiden austretende Fluid erst an die eigentlichen Wirkorte, nämlich an die Hauptschneiden, die Nebenschneiden sowie die Spanflächen und auch den Bohrerrükken gelangen muß. Insbesondere an den Haupt- und Nebenschneiden treten durch die geleistete Zerspanung- und Verformungsarbeit hohe Reibungen und demzufolge hohe Temperaturen auf. Damit an diesen Wirkorten ausreichend Fluid zur Verfügung steht, sind entsprechend große Fluidmengen und hohe Drücke notwendig. Ferner verursachen große Fluidmengen auch hohe Entsorgungskosten. Aus EP 482 982 A1 ist ein Bohrer mit Austrittsöffnungen für ein Fluid mit den im Oberbegriff des Anspruchs 1 angegebenen Merkmalen bekannt. Die Austrittsöffnungen sind über die gesamte Länge der Spannuten verteilt, sind also z.B in einem dem Bohrerschaft nahen Bereich des Bohrer-Schneidteils angeordnet.

Aufgabe der Erfindung ist es, einen Bohrer vorzuschlagen, der im Hinblick auf eine Mindermengenschmierung bzw. -kühlung verbessert ist.

Diese Aufgabe wird durch ein Bohrwerkzeug mit den Merkmalen des Anspruches 1 gelöst. Es hat sich überraschenderweise gezeigt, daß bei einer erfindungsgemäßen Zuführung eines Fluids über Austrittsöffnungen in der Seiten- bzw. Umfangsfläche des Schneidteils eines Bohrers, dessen Standzeiten erhöht werden können, wobei die damit hergestellten Bohrungen eine gute Qualität aufweisen und die zur Kühlung und/oder Schmierung notwendige Fluidmenge reduziert ist. Die der Fluidzuführung dienenden Austrittsöffnungen sind allesamt in einem Bereich angeordnet, der sich von der Bohrerspitze in Richtung des Bohrerschaftes über eine Länge erstreckt, die dem Zweifachen des Durchmessers des Bohrers bzw. des Schneidteiles entspricht. Dieser Bereich spielt nicht nur für das Abheben eines Spans aus einem Werkstückmaterial sondern auch für dessen Umformung eine entscheidende Rolle. Auf eine Fluidzufuhr außerhalb dieses Bereiches wird daher verzichtet. Die gezielte Fluidzufuhr im spitzennahen Bereich und die Verteilung des Fluidstroms auf mehrere Austrittsöffnungen bewirken eine effektive Ausnutzung der bei einer Mindermengenkühlschmierung möglichst knapp zu haltenden Fluidmenge. Diese kann so gering sein, daß das den Bohrerwirkstellen zugeführte Fluid praktisch vollständig verdampft. Das aus einer einzigen Öffnung bzw. punkuell zugeführte Fluid entfaltet somit nur eine lokal eng begrenzte Wirkung. Da mehrere Austrittsöffnungen vorgesehen sind, läßt sich dagegen der Fluidstrom gleichmäßig über einen größeren Längsabschnitt des Schneidteils verteilen, was eine Benetzung der Späne und damit deren Abtransport fördert. In diesem Bereich ist somit noch eine ausreichende Versorgung der Bohrerwirkstellen gewährleistet.

Vorzugsweise ist eine der Austrittsöffnungen möglichst nahe am jeweiligen Wirkort angeordnet. Je nach den gegebenen Anforderungen im Hinblick auf den zu bearbeitenden Werkstoff und die erforderliche Bohrleistung können durch entsprechende Positionierung der Austrittsöffnungen gezielt besonders beanspruchte Wirkstellen mit Fluid versorgt werden. Vorteilhaft ist es, wenn die Austrittsöffnungen in der Spannut angeordnet sind. Die Spannut bzw. der Spannutgrund ist ein für einen störungsfreien Zerspanungsvorgang maßgeblicher Bereich. Der sich von der Hauptschneide in Schaftrichtung wegerstreckende Bereich der Spannut dient in erster Linie dazu, den Span vom Werkstoff abzuheben und in Richtung auf den Rücken der Spanfläche hin umzulenken. Die Spanfläche ist somit ein sehr stark beanspruchter Bereich. Dementsprechend sind bei einer bevorzugten Ausführungsform ein oder mehrere Austrittsöffnungen in der Spanfläche angeordnet. Gegenüber der herkömmlichen Anordnung von Austrittsöffnungen in der Freifläche der Hauptschneiden wird das Fluid direkt an den Wirkort geleitet. Bei einer weiteren vorteilhaften Ausführungsform sind die Austrittsöffnungen nahe an den für die Spanbildung ausschlaggebenden Wirkbereich der Spanfläche angeordnet. Dies ist jener Bereich, der praktisch unmittelbar an die Hauptschneiden angrenzt. Je nach Anwendungsfall ist es auch vorteilhaft, wenn die Austrittsöffnungen in der Nähe der Nebenschneiden und insbesondere an den unmittelbar an die Nebenschneiden angrenzenden Bereich der Spanfläche angeordnet sind. Die Austrittsöffnungen sind in diesem Fall also in einem relativ nahe an der Schneidecke liegenden Bereich des Bohrers angeordnet. Das Fluid kann daher seine Wirkung sowohl an der Hauptschneide als auch an dem schneideckennahen Bereich der Nebenschneide entfalten.

Durch Variation der jeweiligen Positionen der Austrittsöffnungen kann eine Anpassung an unterschiedliche Zerspanungsverhältnisse vorgenommen werden. So etwa bei einer weiteren vorteilhaften Ausgestaltung des erfindungsgemäßen Bohrers, bei welcher die Austrittsöffnungen am Rücken der Spannut angeordnet sind. Dieser Bereich ist insbesondere für die Spanformung mit verantwortlich. Der Krümmungsradius dieses Bereiches bestimmt in hohem Maße die Form bzw. den Krümmungsradius einer Spanlocke. Er wird insbesondere bei sehr schwer verformbaren, festen Werkstückmaterialien beansprucht.

Bei weiteren bevorzugten Ausführungsformen eines erfindungsgemäßen Bohrers sind die Austrittsöffnungen in einer Nebenfreifläche bzw. einer Führungsfase des Bohrers angeordnet. Es ist auch vorteilhaft, wenn die Austrittsöffnungen in den sich an die Führungsfase anschließenden Bohrerrücken vorhanden sind. Die o.g. Positionen der Austrittsöffnungen sind selbstverständlich untereinander kombinierbar, so daß ein erfindungsgemäßer Bohrer den unterschiedlichsten Bearbeitungsaufgaben und Werkstückstoffen anpaßbar ist. Während bei herkömmlichen Bohrern eine Mindermengenschmierung zu einem erheblichen Leistungseinbruch und insbesondere zu einer Verringerung der Standzeiten führt, können mit erfindungsgemäßen Bohrern trotz verringerter Fluidmenge Standzeiten erreicht werden, die denen von herkömmlichen Bohrern entsprechen, bei denen aber beim Zerspanungsvorgang erheblich größere Fluidmengen angewendet werden.

Für die Zuführung eines Fluids innerhalb des Bohrers bestehen prinzipiell zwei Möglichkeiten. Bei der einen ist innerhalb des Bohrers ein zentraler, koaxial zur Bohrerlängsachse verlaufender Fluidkanal angeordnet. In einer bevorzugten Ausführungsform ist dieser Fluidkanal mit einer trichterförmigen Einströmöffnung verbunden, die in der schaftseitigen Stirnfläche des Bohrers angeordnet ist und die sich zur Bohrspitze hin verjüngt. Durch diese Ausgestaltung können die Strömungsverhältnisse für das Fluid innerhalb des Bohrers bzw. einer Bohrvorrichtung verbessert werden. Eine zweite Möglichkeit der Fluidzuführung besteht darin, daß jeder Spannut ein gedrallter Fluidkanal zugeordnet ist. Ein solcher Fluidkanal erstreckt sich zumindest im Bereich des Schneidteils eines Bohrers entsprechend dem Spannutverlauf, also wendelförmig und mit derselben Drallrichtung wie die Spannut. Bei der Herstellung von solchen Vollhartmetallbohrern werden die gedrallten Fluidkanäle durch unterschiedliche Fertigungsverfahren eingebracht. Bei so hergestellten Bohrern münden die Fluidkanäle in die Freiflächen der Bohrerhauptschneiden aus. Die Fluidkanäle bzw. die Austrittsöffnungen werden jedoch nachträglich, beispielsweise mit einem Lotmaterial, verschlossen. Die Verbindung zwischen Austrittsöffnung und einem Fluidkanal erfolgt über einen Verbindungskanal. Dieser Verbindungskanal ist zweckmäßigerweise durch eine Bohrung hergestellt. Durch seitlich angebrachte Bohrungen entstehen somit die obengenannten Verbindungen, über die Fluid den jeweiligen Wirkstellen zugeführt werden kann. Auf diese Weise können herkömmliche Bohrer mit nur geringem fertigungstechnischem Aufwand erfindungsgemäß umgebildet werden.

Es ist vorteilhaft, wenn die Austrittsöffnungen an einem Wirkort in einer sich etwa in Bohrerlängsachse oder in Richtung des Spannutverlaufs erstreckenden Reihe angeordnet sind. Generell ist es zweckmäßig, wenn der Durchmesser der Austrittsöffnungen und der Verbindungskanäle mit zunehmendem Abstand von der Bohrerspitze abnimmt. Auf diese einfache Weise läßt sich der Fluidstrom steuern. Je kleiner der Durchmesser der Austrittsöffnungen ist, desto geringer ist der jeweilige Druckabfall im Fluidkanal und desto geringer ist die austretende Fluidmenge. Wenn also der Durchmesser der spitzenfernen Austrittsöffnungen kleiner und jener der spitzennahen Austrittsöffnungen größer bemessen wird, kann den spitzennahen Haupt-wirkstellen eine größere Fluidmenge und den spitzenfernen, weniger beanspruchten Wirkstellen eine entsprechend kleinere Fluidmenge zugeführt werden. Eine solche Fluidmengensteuerung läßt sich insbesondere dann auf einfache Weise vorsehen, wenn, wie erfindungsgemäß vorgeschlagen, ein oder mehrere Fluidkanäle im Innern des Bohrers vorhanden sind, die über nachträglich eingebrachte Verbindungskanäle mit den entsprechenden Wirkstellen verbunden werden. Je nach der gewünschten Durchflußmenge kann der Durchmesser der Verbindungskanäle bzw. der zugeordneten Austrittsöffnungen variiert werden. Ein Vorteil der erfindungsgemäßen Bohrer ist, daß nur jeweils eine Baugröße mit quasi standardisierter Grundform hergestellt werden muß. Die jeweiligen Austrittsöffnungen können dann nachträglich je nach Anwendungsfall durch eine Bohrung mit frei wählbarem Durchmesser angebracht werden. Der durch eine solche Bohrung hergestellte Verbindungskanal bzw. dessen Mittellängsachse bildet dabei vorzugsweise mit der Bohrerlängsachse einen Winkel von 75° - 90°. Der Verbindungskanal verläuft somit entweder rechtwinklig zur Bohrerlängsachse oder weicht von dieser rechtwinkligen Ausrichtung um jeweils 15° ab. D.h. der Verbindungskanal ist dann mit einer Neigung von 15° zur Bohrerspitze oder zum Bohrerschaft hin geneigt. Durch eine solche Ausrichtung des Verbindungskanals ist gewährleistet, daß die Randbereiche der Austrittsöffnungen noch eine genügende Stabilität aufweisen. Zum anderen hat es sich gezeigt, daß durch die genannte Winkelstellung der Verbindungskanäle die Störanfälligkeit im Hinblick auf eine Verstopfung der Austrittsöffnungen und ein Verhaken von Spänen reduziert ist.

Die Erfindung wird nun anhand der in den Zeichnungen dargestellten Ausführungsbeispiele näher erläutert:
Es zeigen:
- Fig.1: eine Seitenansicht des Bohrerspitzenbereichs eines erfindungsgemäßen Bohrers mit Austrittsöffnungen in der Spanfläche,
- Fig.2: einen schematischen Querschnitt gemäß der Linie II-II in Fig.1,
- Fig.3: eine Ausführungsform mit Austrittsöffnungen im Rücken der Spannut,
- Fig.4: einen schematischen Querschnitt gemäß der Linie IV-IV in Fig.3,
- Fig.5: eine Ausführungsform mit Austrittsöffnungen, die in einem unmittelbar an die Nebenschneide anschließenden Bereich der Spanfläche angeordnet sind,
- Fig.6: einen schematischen Querschnitt gemäß der Linie VI-VI in Fig. 5.,
- Fig.7: eine Ausführungsform mit Austrittsöffnungen in der Führungsfase,
- Fig.8: einen schematischen Querschnitt gemäß der Linie VIII-VIII in Fig.7,
- Fig.9: eine Ausführungsform mit Austrittsöffnungen unterschiedlichen Durchmessers,
- Fig.10: einen schematischen Querschnitt gemäß der Linie X-X in Fig.9,
- Fig.11: eine Ausführungsform mit Austrittsöffnungen im Bohrerrücken,
- Fig.12: eine Ausführungsform, bei der zwei Austrittsöffnungen in der Spanfläche und eine Austrittsöffnung im Spannutrücken angeordnet ist,
- Fig.13: eine Seitenansicht eines erfindungsgemäßen Bohrers mit einem zentral angeordneten Fluidkanal und
- Fig.14: einen Bohrer mit zwei gedrallten Fluidkanälen.

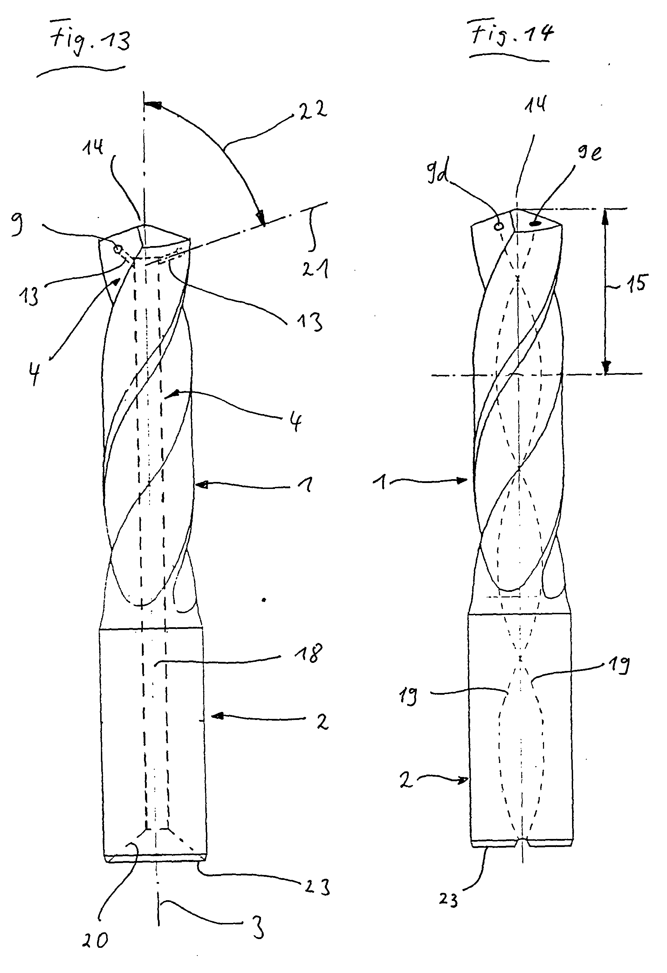

Die in den Zeichnungen dargestellten Bohrer weisen, wie insbesondere aus Fig.13 und Fig.14 ersichtlich, die üblichen Merkmale eines Wendelbohrers auf, nämlich ein Schneidteil 1, einen Spannbereich oder einen Bohrerschaft 2, zwei sich wendelförmig um die Bohrerlängsachse 3 erstreckende Spannuten 4 und zwei Hauptschneiden 5 mit den ihnen zugeordneten Freiflächen 6,6a. Ferner wird jede Spannut 4 von einer Nebenschneide 7 mit einer entsprechenden Freifläche bzw. Führungsfase 8 flankiert.

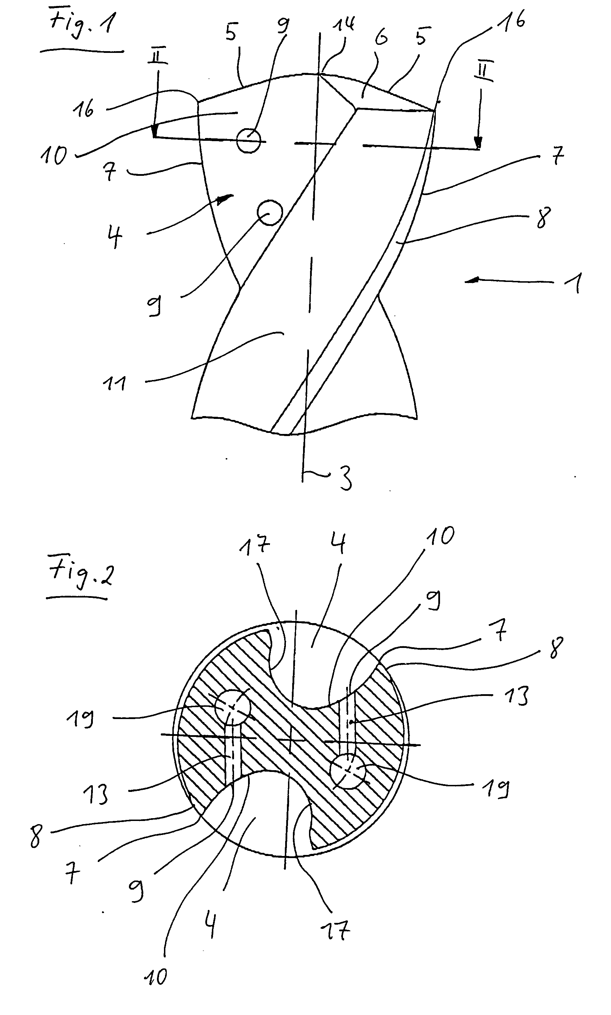

Bei dem in Fig.1 dargestellten Bohrer sind zwei Austrittsöffnungen 9 in der Spanfläche 10 angeordnet. Die Austrittsöffnungen 9 liegen auf einer Linie, die sich etwa parallel zum Spannutverlauf erstreckt. Die Austrittsöffnungen der Ausführungsform gemäß Fig.1, wie auch jene der in den übrigen Figuren dargestellten Bohrer, sind über einen Verbindungskanal 13 mit den jeweiligen Austrittsöffnungen verbunden (Fig.13). Die Verbindungskanäle 13 sind durch eine von der Spanfläche her eingebrachten Bohrung gebildet. Sämtliche Austrittsöffnungen sind ganz allgemein in einem Bereich angeordnet, der sich von der Bohrerspitze 14 in Richtung Bohrerschaft 2 erstreckt und dessen Länge 15 (Fig.14) gleich dem doppelten Durchmesser des Schneidteils 1 ist. Dadurch ist gewährleistet, daß das als Kühl- und Schmiermittel wirkende Fluid in der Nähe des Wirkortes, also dem sich an die Hauptschneiden anschließenden Spitzenbereich des Bohrers zugeführt wird.

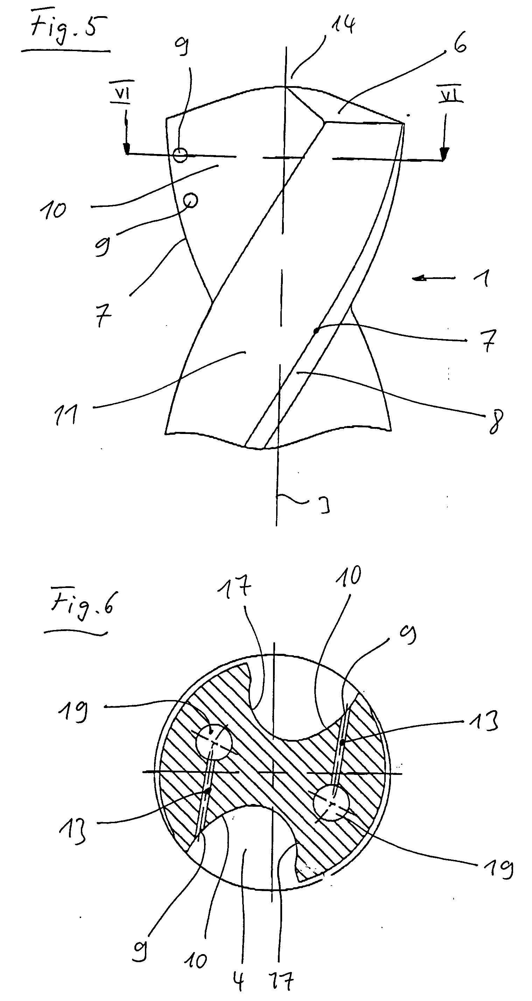

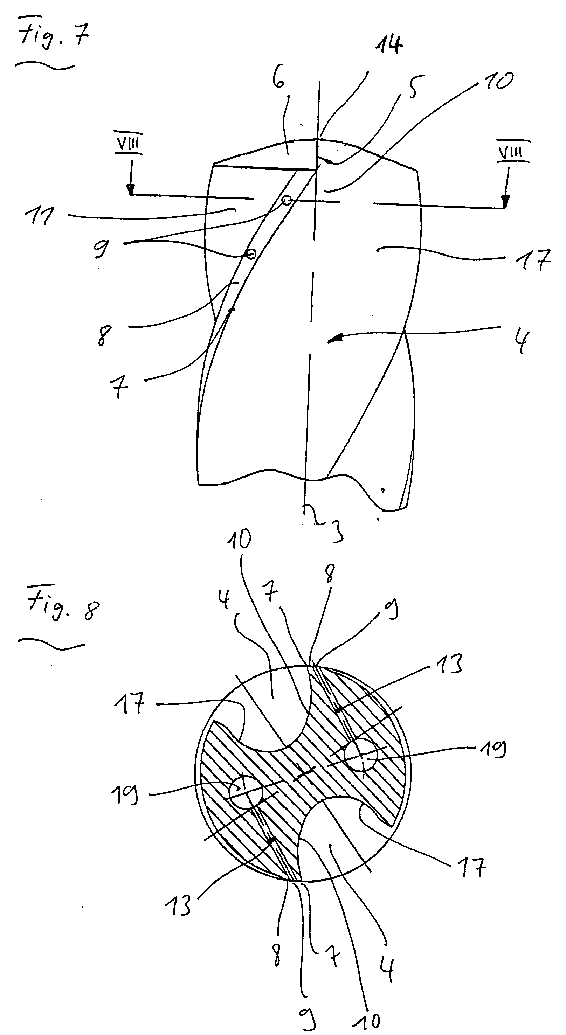

Eine weitere Positionierung der Austrittsöffnungen 9 ist in Fig.5 gezeigt. Die Austrittsöffnungen sind hier in einem sich unmittelbar an die Nebenschneiden 7 angrenzenden Bereich der Spanfläche 10 angeordnet. Eine weitere Variante ist in Fig.7 gezeigt. Hier sind die Austrittsöffnungen 9 direkt in der Nebenfreifläche bzw. der Führungsfase 8 angeordnet.

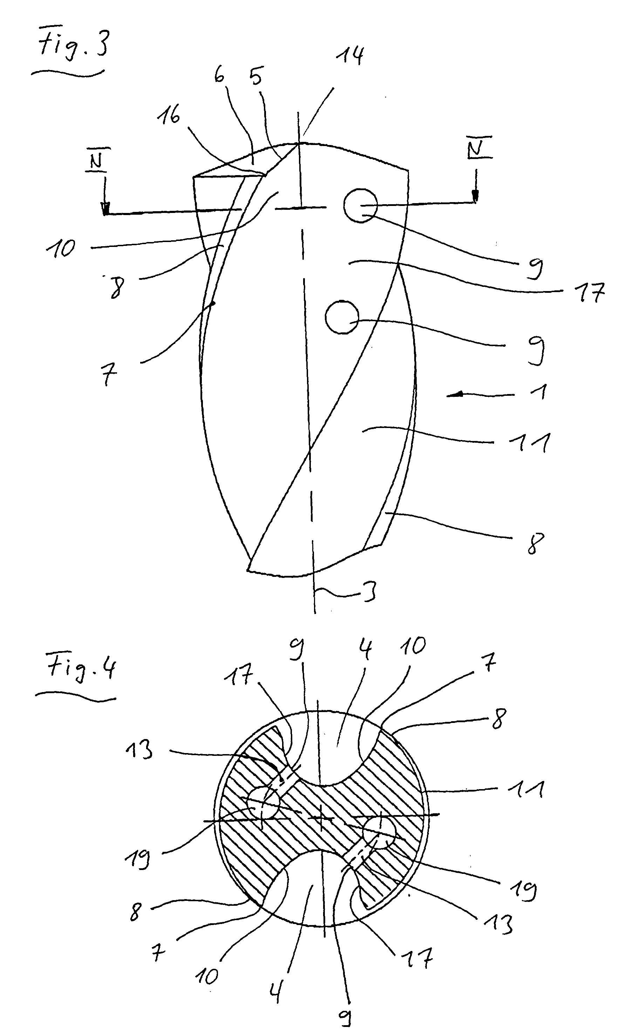

Ein Ausführungsbeispiel, bei dem mehrere Austrittsöffnungen im Spannutrücken 17 angeordnet sind, zeigen die Abbildungen gemäß Fig.3 und 4. Die Austrittsöffnungen 9 sind hier, wie auch bei dem Ausführungsbeispiel der Fig.5 in einer Reihe bzw. auf einer Linie angeordnet, die etwa dem Spannutverlauf folgt. Die Austrittsöffnungen des Ausführungsbeispiels gemäß Fig.7 und 8 sind ebenfalls in Reihe bzw. auf einer Linie angeordnet, wobei die Reihenrichtung bzw. der Verlauf der Linie dem Verlauf der Führungsfase 8 folgt.

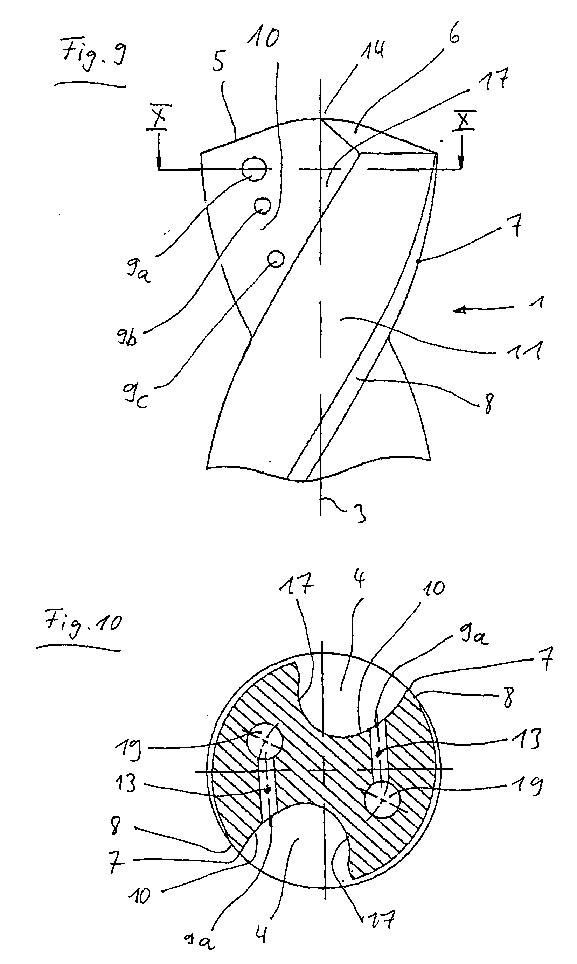

Bei der Ausführungsform gemäß Fig.9 und 10 sind drei Austrittsöffnungen 9a,9b,9c in der Spanfläche 10 vorhanden, die auf einer gekrümmten, etwa dem Spannutverlauf folgenden Linie angeordnet sind. Durch unterschiedliche Durchmesser der Austrittsöffnungen 9a,9b,9c läßt sich zudem die jeweilige Fluidmenge steuern: In der Regel wird die am Wirkort der Hauptschneide bzw. im Bereich der Schneidecke 16 angeordnete Austrittsöffnung 9a den größten Durchmesser aufweisen. Dementsprechend werden die genannten Bereiche, die einen erhöhten Kühl- und Schmieraufwand erfordern, mit einer ausreichenden Fluidmenge versorgt. Die mit zunehmendem Abstand zur Bohrerspitze 14 angeordneten Austrittsöffnungen 9b und 9c weisen kleinere Durchmesser auf, wodurch die zugeführte Fluidmenge entsprechend verringert ist. Es kann auf diese Art nicht nur das Fluid gezielt zu den entsprechenden Wirkorten geleitet, sondern auch noch die Menge gesteuert werden und beispielsweise der Tatsache Rechnung getragen werden, daß in den spitzenfernen Bereichen der Spannut nur noch geringe Schmier- und Kühlmittelmengen benötigt werden, um eine ordnungsgemäße Spanabfuhr zu ermöglichen.

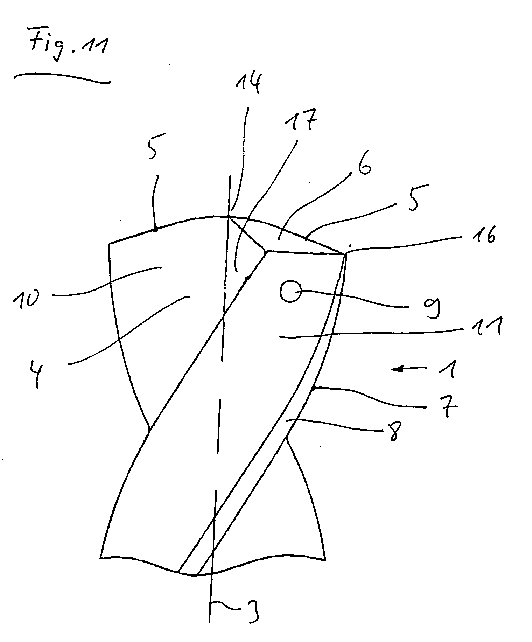

Eine weitere Möglichkeit der Anordnung des Austritts eines Fluids an einem Bohrer ist in Fig. 11 gezeigt. Die Austrittsöffnungen befinden sich hier am Bohrerrücken 11. Die dargestellte Austrittsöffnung 9 befindet sich etwa in mittiger Anordnung und in einem an die Freifläche 6 angrenzenden Bereich. Durch einen solchen Bohrer kann gezielt Fluid zur Kühlung und Schmierung in den beim Bohren entstehenden Spalt zwischen Bohrerrükkenfläche und Bohrlochwand geleitet werden.

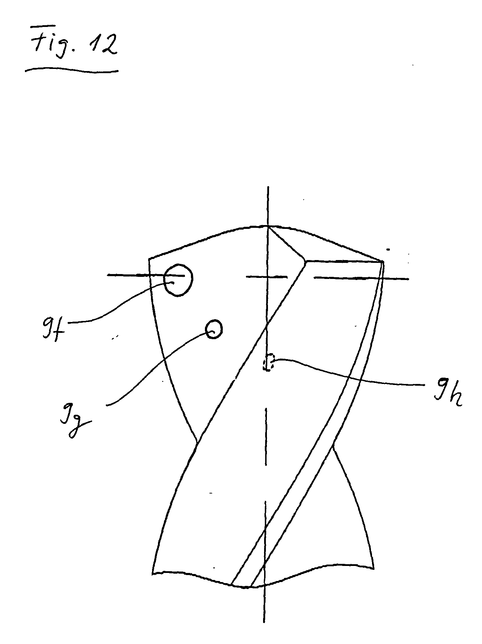

In Fig. 12 ist ein Bohrer dargestellt, bei dem beispielhaft die Möglichkeit angedeutet ist, die Positionierungen der Austrittsöffnungen 9 gemäß den vorangegangenen Ausführungsbeispielen miteinander zu kombinieren. Eine erste Austrittsöffnung 9f ist in dem unmittelbar an die Nebenschneide 7 und an die Hauptschneide 5 angrenzenden Bereich der Spanfläche 10, also im Bereich der Schneidecke 16 des Bohrers angeordnet. Eine zweite Austrittsöffnung 9g ist mit größerem Abstand von der Bohrerspitze 14 und etwa in der Mitte der Spanfläche 10 angeordnet. Eine dritte Austrittsöffnung 9h befindet sich schließlich auf dem Spannutrücken 17. Die beiden Austrittsöffnungen 9g und 9h weisen kleinere Durchmesser auf als die Austrittsöffnung 9f. Mit einem solchen Bohrer kann der stark beanspruchte Schneideckenbereich gezielt mit einer erhöhten Fluidmenge versorgt werden. Der sich daran anschließende und maßgeblich an der Umlenkung des Spans in Richtung auf den Spannutrücken beteiligte Bereich der Spanfläche 10 ist über die Austrittsöffnung 9g mit einer reduzierten Fluidmenge versorgbar. Der sich in Spanflußrichtung an den zuletzt genannten Bereich anschließende Bereich der Spannut, nämlich der Spannutrücken 17 ist gezielt mit einer über den Durchmesser der Austrittsöffnung 9h dosierbaren Fluidmenge versorgbar. Die genannten Austrittsöffnungen 9f, 9g und 9h liegen auf einer Linie, die etwa der Spanabflußrichtung entsprechend verläuft.

In Fig. 13 und 14 ist dargestellt, auf welche Weise ein Fluid den Austrittsöffnungen 9 bzw. den Verbindungskanälen 13 zugeführt werden kann. Dies kann entweder durch einen zentralen Fluidkanal 18 oder durch gedrallte Fluidkanäle erfolgen, die in einer der Spannut entsprechenden Anzahl vorhanden sind. Der zentrale Fluidkanal des Bohrers gemäß Fig.13 erstreckt sich durch den gesamten Bohrer hindurch und endet blind mit Abstand vor der Bohrerspitze 14. Sein schaftseitiges Ende mündet in eine trichterförmige Einströmöffnung 20, die sich zur Bohrerspitze 14 hin verjüngt. Der Fluidkanal 18 ist, wie bereits ausgeführt, über Verbindungskanäle 13 mit den Austrittsöffnungen 9 verbunden. Bei dem Bohrer gemäß Fig.14 sind zwei Fluidkanäle 19 vorhanden, die sich durch den Bohrer hindurch mit einer dem Spannutverlauf entsprechenden Wendelform erstrecken. Die Fluidkanäle 19 münden jeweils mit einer Öffnung (nicht dargestellt) in der Stirnfläche 23 des Bohrerschaftes. Herstellungsbedingt münden die Fluidkanäle 19 mit Austrittsöffnungen 9d und 9e in den Freiflächen 6. Die Austrittsöffnungen sind jedoch verschlossen und deshalb nicht wirksam. Das über die Fluidkanäle 19 zugeführte Fluid wird somit nicht über die Freiflächen, sondern über Verbindungskanäle (nicht dargestellt) und entsprechende Austrittsöffnungen, wie etwa in Fig.10 dargestellt, zum Wirkort des Bohrers beim Zerspanungsprozeß geführt.

Die Verbindungskanäle 13 sind in Bezug auf die Bohrerlängsachse 3 so ausgerichtet, daß sie damit einen Winkel 22 von 75° - 90° einschließen. Die in Fig.13 beispielhaft dargestellten Austrittskanäle 13 sind zur Bohrerspitze 14 hingeneigt, wobei ihre Mittellängsachse 21 mit der Bohrerlängsachse 3 einen Winkel 22 im Bereich von 75° - 90° bildet.

### Bezugszeichenliste

- 1: Schneidteil
- 2: Bohrerschaft
- 3: Bohrerlängsachse
- 4: Spannut
- 5: Hauptschneide
- 6: Freifläche
- 7: Nebenschneide
- 8: Führungsfase
- 9: Austrittsöffnung
- 10: Spanfläche
- 11: Bohrerrücken
- 13: Verbindungskanal
- 14: Bohrerspitze
- 15: Länge
- 16: Schneidecke
- 17: Spannutrücken
- 18: Fluidkanal
- 19: Fluidkanal
- 20: Einströmöffnung
- 21: Mittellängsachse
- 22: Winkel
- 23: Stirnfläche

## Patentansprüche

1. Bohrer für einen Bohrvorgang mit Mindermengenkühlschmierung, mit einem Schneidteil (1) mit wenigstens einer sich wendelförmig um die Bohrerlängsachse (3) erstreckenden Spannut (4), einem Bohrerschaft (2) und wenigstens einem sich innerhalb des Bohrers in dessen Längsrichtung erstreckenden und zur Zuführung von Kühlschmiermittel dienenden Fluidkanal (18,19), wobei
die Seiten- bzw. Umfangsfläche des Schneidteils (1) mehrere mit dem Fluidkanal (18, 19) jeweils über einen Verbindungskanal (13) fluidisch verbundene Austrittsöffnungen (9) aufweist und die Freiflächen (6) der Hauptschneiden (4) frei sind von solchen Austrittsöffnungen.
dadurch gekennzeichnet,
daß **alle** Austrittsöffnungen (9) in einem Bereich angeordnet ist, der sich von der Bohrerspitze (14) in Richtung des Bohrerschafts über eine dem zweifachen Durchmesser des Schneidteils entsprechende Strecke erstreckt und daß in der Spannut (4), einer Führungsfase (8) oder einem Rücken (11) des Bohrers jeweils mehrere Austrittsöffnungen (9) vorhanden sind.

2. Bohrer nach Anspruch 1,
dadurch gekennzeichnet,
daß der Durchmesser der Austrittsöffnungen (9) und der Verbindungskanäle (13) mit zunehmenden Abstand von der Bohrerspitze (14) abnimmt.

3. Bohrer nach Anspruch 1 oder 2,
gekennzeichnet durch
eine oder mehrere Austrittsöffnungen (9) in der Spanfläche (10) der Hauptschneide (5).

4. Bohrer nach Anspruch 3,
dadurch gekennzeichnet,
daß die Austrittsöffnungen (9) in dem an die Hauptschneiden (5) angrenzenden, für die Spanbildung maßgeblichen Wirkbereich der Spanfläche (10) angeordnet sind.

5. Bohrer nach Anspruh 3 oder 4,
dadurch gekennzeichnet,
daß die Austrittsöffnungen (9) in dem unmittelbar an die Nebenschneide (7) angrenzenden Bereich der Spanfläche (10) angeordnet sind.

6. Bohrer nach Anspruch 1 oder 2,
gekennzeichnet durch
eine oder mehrere Austrittsöffnungen (9) im Spannutrücken (17).

7. Bohrer nach einem der Ansprüche 1 bis 6,
gekennzeichnet durch
einen zentralen, koaxial zur Bohrerlängsachse (3) verlaufenden Fluidkanal (18).

8. Bohrer nach Anspruch 7,
dadurch gekennzeichnet,
daß die Stirnfläche (23) des Bohrerschaftes (2) eine sich zur Bohrerspitze (14) hin verjüngende trichterförmige und mit dem Fluidkanal (18) fluidisch verbundene Einströmöffnung (20) aufweist.

9. Bohrer nach einem der Ansprüche 1 bis 8,
dadurch gekennzeichnet,
daß jeder Spannut (4) ein Fluidkanal (19) zugeordnet ist, der sich zumindest im Bereich des Schneidteils (1) entsprechend dem Spannutverlauf wendelförmig erstreckt.

10. Bohrer nach Anspruch 9,
dadurch gekennzeichnet,
daß der Fluidkanal (19) über eine Austrittsöffnung (9d,9e) in die Freifläche (6) einer Hauptschneide (5) mündet, wobei jedoch die Austrittsöffnung verschlossen ist.

11. Bohrer nach einem der Ansprüche 1 bis 10,
dadurch gekennzeichnet,
daß der Verbindungskanal (13) durch eine Bohrung gebildet ist.

12. Bohrer nach einem der Ansprüche 1 bis 11,
dadurch gekennzeichnet,
daß mehrere Austrittsöffnungen **(9)** in einer sich etwa in Richtung der Bohrerlängsachse (3) oder des Spannutverlaufs erstreckenden Reihe angeordnet sind.

13. Bohrer nach einem der Ansprüche 1 bis 12,
dadurch gekennzeichnet,
daß der Durchmesser des Fluidkanals (18,19) größer ist als der Durchmesser des Verbindungskanals (13).

14. Bohrer nach einem der Ansprüche 1-13,
dadurch gekennzeichnet,
daß der Verbindungskanal (13) bzw. dessen Mittellängsachse (21) mit der Bohrerlängsachse (3) einen Winkel (22) von 75° - 90° bildet.

15. **Verwendung eines nach den Ansprüchen 1 bis 14 ausgebildeten Bohrers für ein Bohrverfahren mit Mindermengenkühlschmierung.**

## Claims

1. Drill for a drilling operation with minimum-quantity cooling lubrication, comprising a cutting part (1) with at least one flute (4) extending helically around the drill longitudinal axis (3), a drill shank (2), and at least one fluid channel (18, 19) extending inside the drill in its longitudinal direction and serving to feed cooling lubricant, the side surface or peripheral surface of the cutting part (1) having a plurality of discharge openings (9) fluidically connected to the fluid channel (18, 19) in each case via a connecting channel (13), and the flanks (6) of the main cutting edges (4) being free of such discharge openings, characterized in that all the discharge openings (9) are arranged in a region which extends from the drill point (14) in the direction of the drill shank over a distance corresponding to twice the diameter of the cutting part, and in that in each case there are a plurality of discharge openings (9) in the flute (4), a land (8) or a back (11) of the drill.

2. Drill according to Claim 1, characterized in that the diameter of the discharge openings (9) and of the connecting channels (13) decreases with increasing distance from the drill point (14).

3. Drill according to Claim 1 or 2, characterized by one or more discharge openings (9) in the face (10) of the main cutting edge (5).

4. Drill according to Claim 3, characterized in that the discharge openings (9) are arranged in that effective region of the face (10) which adjoins the main cutting edges (5) and is decisive for the chip formation.

5. Drill according to Claim 3 or 4, characterized in that the discharge openings (9) are arranged in that region of the face (10) which directly adjoins the secondary cutting edge (7).

6. Drill according to Claim 1 or 2, characterized by one or more discharge openings (9) in the flute back (17).

7. Drill according to one of Claims 1 to 6, characterized by a central fluid channel (18) running coaxially to the drill longitudinal axis (3).

8. Drill according to Claim 7, characterized in that the end surface (23) of the drill shank (2) has a funnel-shaped inflow opening (20) tapering towards the drill point (14) and fluidically connected to the fluid channel (18).

9. Drill according to one of Claims 1 to 8, characterized in that a fluid channel (19) is assigned to each flute (4), and this fluid channel (19) extends helically in accordance with the flute path at least in the region of the cutting part (1).

10. Drill according to Claim 9, characterized in that the fluid channel (19) opens via a discharge opening (9d, 9e) into the flank (6) of a main cutting edge (5), although the discharge opening is closed.

11. Drill according to one of Claims 1 to 10, characterized in that the connecting channel (13) is formed by a bore.

12. Drill according to one of Claims 1 to 11, characterized in that a plurality of discharge openings (9) are arranged in a row extending approximately in the direction of the drill longitudinal axis (3) or the flute path.

13. Drill according to one of Claims 1 to 12, characterized in that the diameter of the fluid channel (18, 19) is greater than the diameter of the connecting channel (13).

14. Drill according to one of Claims 1 to 13, characterized in that the connecting channel (13) or its centre longitudinal axis (21) forms an angle (22) of 75°-90° with the drill longitudinal axis (3).

15. Use of a drill designed according to Claims 1 to 14 for a drilling method with minimum-quantity cooling lubrication.

## Revendications

1. Foret destiné à une opération de perçage avec utilisation d'une quantité réduite de lubrifiant-réfrigérant, comportant une partie de coupe (1) présentant au moins une rainure à copeaux (4) qui s'étend en hélice autour de l'axe longitudinal (3) du foret, une tige de foret (2) et au moins un canal à fluide (18, 19) qui s'étend à l'intérieur du foret dans sa direction longitudinale et qui sert à l'amenée de lubrifiant-réfrigérant, dans lequel la surface latérale ou périphérique de la partie de coupe (1) présente plusieurs ouvertures de sortie (9) en communication hydraulique avec le canal à fluide (18, 19) via un canal de communication respectif (13), et les surfaces libres (6) des tranchants principaux (4) sont dépourvues de telles ouvertures de sortie, caractérisé en ce que **toutes** les ouvertures de sortie (9) sont disposées dans une zone qui s'étend depuis la pointe de foret (14) en direction de la tige du foret sur un trajet qui correspond au double du diamètre de la partie de coupe, et en ce que plusieurs ouvertures de sortie (9) existent dans la rainure à copeaux (4), dans un chanfrein de guidage (8) ou dans un dos (11) du foret.

2. Foret selon la revendication 1, caractérisé en ce que le diamètre des ouvertures de sortie (9) et des canaux de communication (13) diminue en fonction de l'augmentation de la distance par rapport à la pointe de foret (14).

3. Foret selon l'une ou l'autre des revendications 1 et 2, caractérisé par une ou plusieurs ouvertures de sortie (9) dans la surface de coupe (10) du tranchant principal (5).

4. Foret selon la revendication 3, caractérisé en ce que les ouvertures de sortie (9) sont disposées dans la zone d'action de la surface de coupe (10), qui est adjacente aux tranchants principaux (5) et qui est déterminante pour la formation de copeaux.

5. Foret selon l'une ou l'autre des revendications 3 et 4, caractérisé en ce que les ouvertures de sortie (9) sont disposées dans la zone de la surface de coupe (10) qui est immédiatement adjacente au tranchant secondaire (7).

6. Foret selon l'une ou l'autre des revendications 1 et 2, caractérisé par une ou plusieurs ouvertures de sortie (9) dans le dos (17) de la rainure à copeaux.

7. Foret selon l'une quelconque des revendications 1 à 6, caractérisé par un canal à fluide central (18) qui s'étend coaxialement à l'axe longitudinal (3) du foret.

8. Foret selon la revendication 7, caractérisé en ce que la surface frontale (23) de la tige (2) présente une ouverture d'entrée (20) en forme d'entonnoir et en communication hydraulique avec le canal à fluide (18), qui va en se rétrécissant vers la pointe (14).

9. Foret selon l'une quelconque des revendications 1 à 8, caractérisé en ce qu'à chaque rainure à copeaux (4) est associé un canal à fluide (19) qui s'étend du moins au niveau de la partie de coupe (1) et en hélice en correspondance du tracé de la rainure à copeaux.

10. Foret selon la revendication 9, caractérisé en ce que le canal à fluide (19) débouche dans la surface libre (6) d'un tranchant principal (5) via une ouverture de sortie (9d, 9e), ladite ouverture de sortie étant cependant obturée.

11. Foret selon l'une quelconque des revendications 1 à 10, caractérisé en ce que le canal de communication (13) est formé par un perçage.

12. Foret selon l'une quelconque des revendications 1 à 11, caractérisé en ce que plusieurs ouvertures de sortie **(9)** sont disposées en une rangée qui s'étend approximativement en direction de l'axe longitudinal (3) du foret ou du tracé de la rainure à copeaux.

13. Foret selon l'une quelconque des revendications 1 à 12, caractérisé en ce que le diamètre du canal à fluide (18, 19) est supérieur au diamètre du canal de communication (13).

14. Foret selon l'une quelconque des revendications 1 à 13, caractérisé en ce que le canal de communication (13) ou son axe longitudinal central (21) forme avec l'axe longitudinal (3) du foret un angle (22) de 75° à 90°.

15. **Utilisation d'un foret réalisé selon les revendications 1 à 14 pour un procédé de perçage avec utilisation d'une quantité réduite de lubrifiant-réfrigérant.**
